# EUROPEAN PATENT APPLICATION

(11) **EP 3 726 269 A1**
(43) Date of publication of application: **21.10.2020**
(21) Application number: 18888989.3
(22) Date of filing: 27.11.2018
(51) Int. Cl.: G02B 7/02, G02B 7/10, G03B 11/04

(54) **LENS UNIT**

(30) Priority: 12.12.2017 JP 2017237327
(71) Applicant: Nittoh Inc., Suwa-shi, Nagano 3920131 (JP)
(72) Inventor: HANAOKA Takafumi, Suwa-shi, Nagano 392-0021 (JP)
(74) Representative: Schmitt-Nilson Schraud Waibel Wohlfrom Patentanwälte Partnerschaft mbB
(86) International application number: PCT/JP2018/043505
(87) International publication number: WO 2019/116881

(57) **Abstract**

[Problem] To provide a lens unit that includes a lens barrel that holds lenses and an attachment that is attached to an end portion of the lens barrel in a detachable manner, and makes it possible for the attachment to be easily attached to and detached from the lens barrel.

[Solution] This lens unit includes a lens barrel 6 holding lenses 2 and an attachment 7 attached to an end portion of the lens barrel 6 in a detachable manner. The lens barrel 6 includes magnets 11 for attaching the attachment 7 to the end portion of the lens barrel 6. The attachment 7 includes magnets 16 attracted to the magnets 11. The lens barrel 6 has a contact surface 12b for positioning the attachment 7 to the lens barrel 6 in a direction orthogonal to an optical axis direction of the lenses 2. The contact surface 12b is an inclined surface inclined with respect to the optical axis direction of the lenses 2. The attachment 7 has a contact surface 15b in contact with the contact surface 12b.

## Description

### Field

The present invention relates to a lens unit including a lens barrel and an attachment attached to the lens barrel in a detachable manner.

### Background

Wide-angle lenses having rear filters have been known (e.g., refer to Patent Literature 1). A barrel of the wide-angle lens described in Patent Literature 1 includes an inner fixed barrel and an outer fixed barrel that are formed integrated with a mount member for being mounted to a camera body, and a focusing operation barrel that is disposed between the inner fixed barrel and the outer fixed barrel in a rotatable manner. Inside the inner fixed barrel, a first focusing barrel is disposed. To an outer surface of a rear portion of the first focusing barrel, a rear filter holder holding a rear filter is attached in a rotatable manner. The rear filter holder has a circumferential groove formed on its inner surface. In the circumferential groove, a rear filter holder support pin that is fixed to the first focusing barrel is fitted. On an outer surface of the rear filter holder, a straight advance guide pin is fixed. The rear filter holder has a rear filter retainer formed on its rear edge.

### Citation List

### Patent Literature

Patent Literature 1: Japanese Patent No. 3771549 Summary

### Technical Problem

In the wide-angle lens described in Patent Literature 1, when the rear filter is replaced with another optical filter having a different characteristic, the rear filter holder needs to be detached from the barrel. Therefore, it is preferable for the wide-angle lens that the rear filter holder be easily attached to and detached from the barrel. However, in the wide-angle lens described in Patent Literature 1, the rear filter holder support pin that is fixed to the first focusing barrel is fitted in the circumferential groove formed on the inner surface of the rear filter holder. Because of this structure, in the wide-angle lens, the rear filter holder support pin needs to be removed from the circumferential groove when the rear filter holder is detached while the rear filter holder support pin needs to be fitted in the circumferential groove when the rear filter holder is attached. The wide-angle lens described in Patent Literature 1, thus, makes it impossible for the rear filter holder to be easily attached to and detached from the barrel.

The problem to be solved by the invention is to provide a lens unit that includes a lens barrel holding lenses and an attachment attached to an end portion of the lens barrel in a detachable manner and makes it possible for the attachment to be easily attached to and detached from the lens barrel.

### Solution to Problem

To solve the problem described above, a lens unit of the invention includes a lens barrel that holds lenses and an attachment that is attached to the lens barrel at an end portion of the lens barrel in an optical axis direction of the lenses in a detachable manner. Either one of the lens barrel and the attachment includes first magnets that are permanent magnets and used for attaching the attachment to the end portion of the lens barrel. The other of the lens barrel and the attachment includes second magnets that are permanent magnets and attracted to the first magnets or soft magnetic bodies that are attracted to the first magnets. Either one of the lens barrel and the attachment has a first contact portion that is used for positioning the attachment to the lens barrel in a direction orthogonal to the optical axis direction of the lenses. The first contact portion is an inclined surface that is inclined with respect to the optical axis direction of the lenses. The other of the lens barrel and the attachment has a second contact portion that is in contact with the first contact portion.

In the lens unit of the invention, either one of the lens barrel and the attachment includes the first magnets that are used for attaching the attachment to the end portion of the lens barrel. The other of the lens barrel and the attachment has the second magnets or the soft magnetic bodies that are attracted to the first magnets. That is, in the invention, the attachment is attached to the lens barrel by magnetic attraction force. The invention, thus, makes it possible for the attachment to be easily attached to and detached from the lens barrel.

In the invention, either one of the lens barrel and the attachment has the first contact portion that is used for positioning the attachment to the lens barrel in the direction orthogonal to the optical axis direction of the lenses. The other of the lens barrel and the attachment has the second contact portion that is in contact with the first contact portion. The invention, thus, makes it possible to precisely attach the attachment to the lens barrel in the direction orthogonal to the optical axis direction of the lenses using the first contact portion and the second contact portion that are in contact with each other, although the attachment is attached to the lens barrel by the magnetic attraction force.

Further, in the invention, the first contact portion is an inclined surface that is inclined with respect to the optical axis direction of the lenses. The invention, thus, makes it possible for the attachment to be more easily attached to and detached from the lens barrel than an exemplary case where either one of the lens barrel and the attachment has a first cylindrical unit having an outer circumferential surface parallel to the optical axis direction of the lenses, the other of the lens barrel and the attachment has a second cylindrical unit having an inner circumferential surface parallel to the optical axis direction of the lenses, and the attachment is positioned to the lens barrel in the direction orthogonal to the optical axis direction of the lenses by the outer circumferential surface of the first cylindrical unit and the inner circumferential surface of the second cylindrical unit.

In other word, in the case where the attachment is positioned to the lens barrel in the direction orthogonal to the optical axis direction of the lenses by the outer circumferential surface of the first cylindrical unit and the inner circumferential surface of the second cylindrical unit, when the attachment is inclined with respect to the optical axis direction of the lenses while the attachment is attached to and detached from the lens barrel, contact pressure between the outer circumferential surface of the first cylindrical unit and the inner circumferential surface of the second cylindrical unit partially increases. As a result, galling easily occurs between the outer circumferential surface of the first cylindrical unit and the inner circumferential surface of the second cylindrical unit. When such galling occurs, it is difficult for the attachment to be attached to and detached from the lens barrel. Attention, thus, should be paid that the attachment is not inclined with respect to the optical axis direction of the lenses while the attachment is attached to and detached from the lens barrel. In contrast, in the invention, the contact portion is an inclined surface that is inclined with respect to the optical axis direction of the lenses. This makes it possible to prevent the occurrence of galling between the first contact portion and the second contact portion even when the attachment is inclined with respect to the optical axis direction of the lenses while the attachment is attached to and detached from the lens barrel. The invention, thus, does not need to pay attention that the attachment is not inclined with respect to the optical axis direction of the lenses while the attachment is attached to and detached from the lens barrel. As a result, the invention makes it possible for the attachment to be easily attached to and detached from the lens barrel.

Furthermore, when the attachment is positioned to the lens barrel in the direction orthogonal to the optical axis direction of the lenses by the outer circumferential surface of the first cylindrical unit and the inner circumferential surface of the second cylindrical unit, it is necessary to provide a slight clearance between the outer circumferential surface of the first cylindrical unit and the inner circumferential surface of the second cylindrical unit for making it possible for the attachment to be attached to and detached from the lens barrel. This is because that when the outer diameter of the outer circumferential surface of the first cylindrical unit and the inner diameter of the inner circumferential surface of the second cylindrical unit are equal, the first cylindrical unit cannot be inserted into the inside of the inner circumferential surface of the second cylindrical unit. However, when a clearance is provided between the outer circumferential surface of the first cylindrical unit and the inner circumferential surface of the second cylindrical unit, the centers of the first cylindrical unit and the second cylindrical unit may be separated by the clearance. In contrast, in the invention, the first contact portion, which is an inclined surface, makes it easy for the second contact portion to be in contact with the first contact portion over the whole of the second contact portion. The invention makes it possible for the attachment to be attached to and detached from the lens barrel without a clearance (gap) between the first contact portion and the second contact portion. In other word, the invention makes it possible for the attachment to be attached to the lens barrel such that the second contact portion is in contact with the first contact portion over the whole of the second contact portion, thereby making it possible to coincide the center of the attachment with the center (optical axis) of the lens barrel.

In the invention, the attachment is a filter component having an optical filter, a flare cutter that prevents internal reflection inside the lens barrel, an aperture mechanism configured to regulate a light amount, a lens component having an additional lens, or a lens cap, for example.

In the invention, it is preferable that the second contact portion be an inclined surface that is inclined with respect to the optical axis direction of the lenses and in contact with the first contact portion. This structure makes it possible to increase a contact area between the first contact portion and the second contact portion. As a result, the contact state between the first contact portion and the second contact portion can be stabilized.

In the invention, it is preferable that either one of the lens barrel and the attachment include a plurality of the first magnets that are arranged in an annular shape having the optical axis of the lenses as the center when viewed from the optical axis direction of the lenses, the other of the lens barrel and the attachment include the same number of second magnets or soft magnetic bodies as the number of first magnets, the second magnets or the soft magnet bodies being arranged in an annular shape having the optical axis of the lenses as the center when viewed from the optical axis direction of the lenses. This structure makes it possible to increase the strength of attaching the attachment to the lens barrel using the first magnets and the second magnets or the soft magnetic bodies.

In the invention, it is preferable that the first magnets be arranged at equal angular pitches around the optical axis of the lenses when viewed from the optical axis direction of the lenses, and the second magnets or the soft magnetic bodies be arranged at equal angular pitches around the optical axis of the lenses when viewed from the optical axis direction of the lenses. This structure, in which the first magnets and the second magnets or the soft magnetic bodies are arranged at equal intervals when viewed from the optical axis direction of the lenses, makes it possible to eliminate a variation of the magnetic attraction force generated between the attachment and the lens barrel in the direction around the optical axis of the lenses, thereby making it possible to equalize the magnetic attraction force generated between the attachment and the lens barrel in the direction around the optical axis of the lenses. Therefore, this structure makes it possible to further increase the strength of attaching the attachment to the lens barrel.

In the invention, it is preferable that the shape of the first contact portion when viewed from the optical axis direction of the lenses be an annular shape or an arc like shape having the optical axis of the lenses as the center of curvature. This structure makes it possible to gradually reduce a degree of overlapping between the first magnets and the second magnets or the soft magnetic bodies in the optical axis direction by rotating the attachment attached to the lens barrel around the optical axis of the lenses using the first contact portion, thereby making it possible to weaken the magnetic attraction force between the first magnets and the second magnets or the soft magnetic bodies. This structure, thus, can detach the attachment from the lens barrel easily even when the magnetic attraction force between the first magnets and the second magnets or the soft magnetic bodies is relatively strong.

In the invention, it is preferable that the shape of the first contact portion when viewed from the optical axis direction of the lenses be an annular shape having the optical axis of the lenses as the center of curvature. This structure makes it easier to machine the first contact portion on either one of the lens barrel and the attachment than a case where the first contact portion is formed in an arc like shape.

In the invention, it is preferable that either one of the lens barrel and the attachment have a first positioning portion that is used for positioning the attachment to the lens barrel in the direction around the optical axis of the lenses, and the other of the lens barrel and the attachment have a second positioning portion that is used for positioning the attachment to the lens barrel in the direction around the optical axis of the lenses together with the first positioning portion. This structure makes it possible to attach the attachment to the lens barrel at a correct position using the first positioning portion and the second positioning portion, although, in either one of the lens barrel and the attachment, the first magnets are arranged in an annular shape having the optical axis of the lenses as the center of curvature and at equal angular pitches around the optical axis of the lenses when viewed from the optical axis direction of the lenses while, in the other of the lens barrel and the attachment, the second magnets or the soft magnetic bodies are arranged in an annular shape having the optical axis of the lenses as the center of curvature and at equal angular pitches around the optical axis of the lenses when viewed from the optical axis direction of the lenses.

In the invention, it is preferable that the first positioning portion be a recess, the second positioning portion be a protrusion that is fitted in the recess, and the protrusion protrude in the optical axis direction of the lenses. This structure makes it possible to attach the attachment to the lens barrel at only a correct position using the recess and the protrusion that is fitted in the recess, although, in either one of the lens barrel and the attachment, the first magnets are arranged in an annular shape having the optical axis of the lenses as the center of curvature and at equal angular pitches around the optical axis of the lenses when viewed from the optical axis direction of the lenses while, in the other of the lens barrel and the attachment, the second magnets or the soft magnetic bodies are arranged in an annular shape having the optical axis of the lenses as the center of curvature and at equal angular pitches around the optical axis of the lenses when viewed from the optical axis direction of the lenses.

In the invention, it is preferable that the shape of the recess when viewed from the optical axis direction of the lenses be an arc like shape having the optical axis of the lenses as the center of curvature, and a central angle of the recess formed in an arc like shape with respect to the optical axis of the lenses be smaller than an arrangement pitch angle of the first magnets with respect to the optical axis of the lenses when viewed from the optical axis direction of the lenses. This structure makes it possible to weaken the magnetic attraction force between the first magnets and the second magnets or the soft magnetic bodies by rotating the attachment attached to the lens barrel around the optical axis of the lenses, although the attachment can be attached to the lens barrel at only the correct position using the recess and the protrusion. This structure makes it possible to easily detach the attachment from the lens barrel, although the attachment can be attached to the lens barrel at only the correct position using the recess and the protrusion and even when the magnetic attraction force between the first magnets and the second magnets is relatively strong.

In the invention, it is preferable that the other of the lens barrel and the attachment include the second magnets. This structure makes it possible to attach the attachment to the lens barrel by magnetic attraction force between the first magnets and the second magnets, thereby making it possible to further increase the strength of attaching the attachment to the lens barrel than a case where the other of the lens barrel and the attachment includes soft magnetic bodies attracted to the first magnets.

In the invention, the attachment may include the first magnets and the lens barrel may include the soft magnetic bodies. In the case where the lens barrel includes the first magnets or the second magnets, when powdered magnetic bodies such as iron sand stick to the first magnets or the second magnets, the lens barrel, which is expensive, may be unusable in the worst case. The lens barrel including the soft magnetic bodies, however, can avoid a case where powdered magnetic bodies stick to the expensive lens barrel, thereby causing the lens barrel to be unusable.

In the invention, the attachment may be attached to the end portion of the lens barrel on the side opposite to a subject in a detachable manner, for example.

### Advantageous Effects of Invention

As described above, the invention makes it possible for the attachment to be easily attached to and detached from the lens barrel in the lens unit including the lens barrel holding the lenses and the attachment attached to the end portion of the lens barrel in a detachable manner.

### Brief Description of Drawings

Fig. 1 is a schematic side view of an imaging device using a lens unit according to an embodiment of the invention.
Fig. 2 is an exploded perspective view of the lens unit illustrated in Fig. 1.
Fig. 3(A) is an enlarged view of portion E in Fig. 2(A).
Fig. 3(B) is an enlarged view of portion F in Fig. 2(B).
Fig. 4(A) is a cross-sectional view of a part of a lens barrel and an attachment that are illustrated in Fig. 2.
Figs. 4(B) and 4(C) are enlarged cross-sectional views for explaining a structure of portion G in Fig. 4(A).
Fig. 5 is a diagram for explaining an arrangement relation among first magnets, second magnets, a recess, and a protrusion that are illustrated in Fig. 3 from a side opposite to a subject.

### Description of Embodiments

The following describes embodiments of the invention with reference to the accompanying drawings.

### Lens unit structure

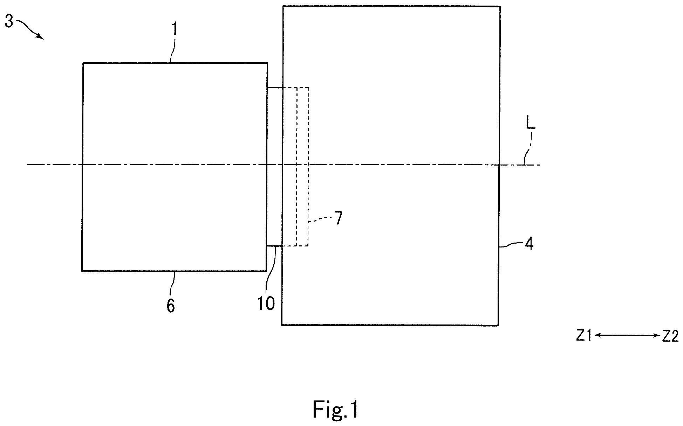

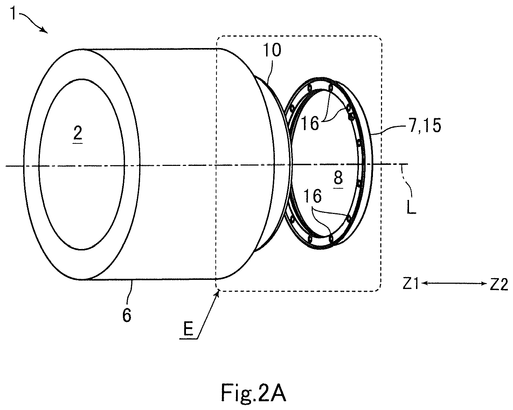

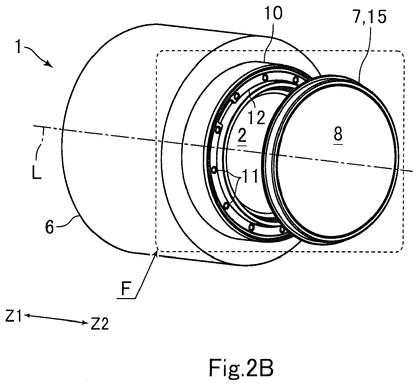

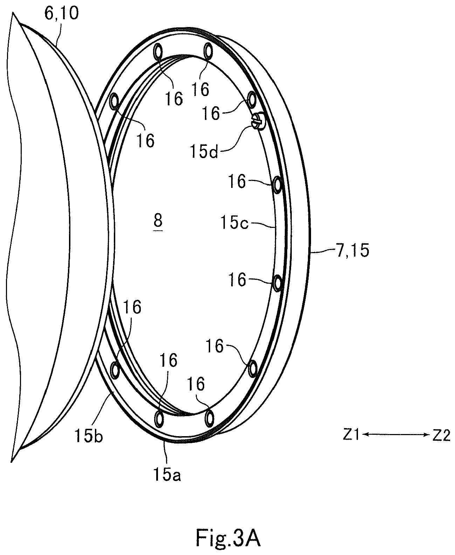

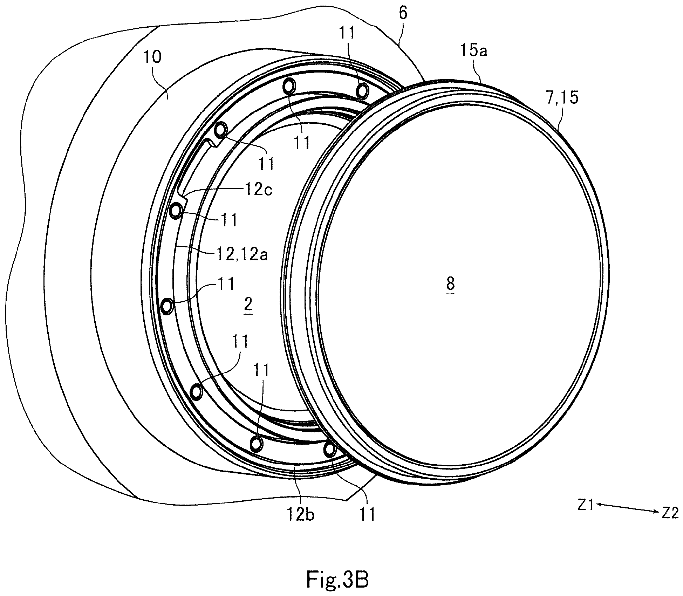

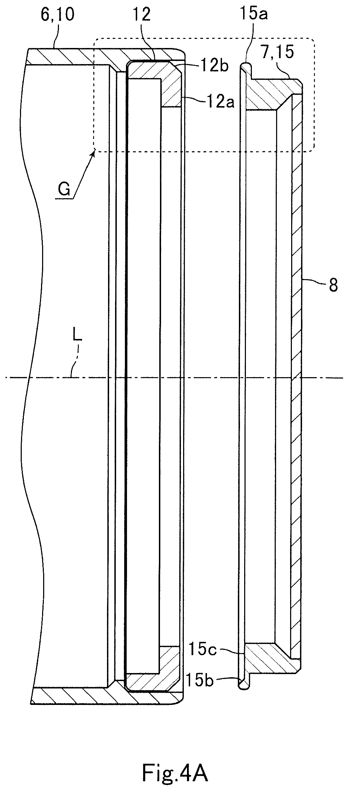

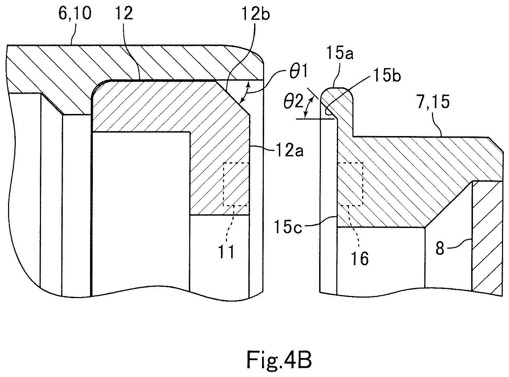

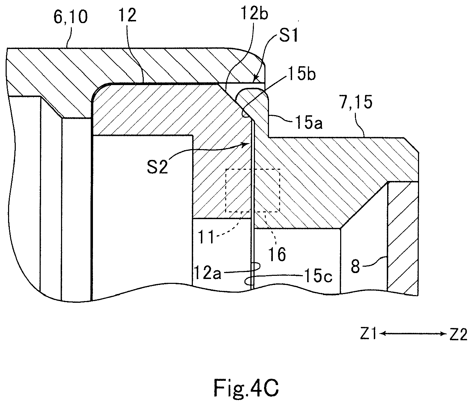

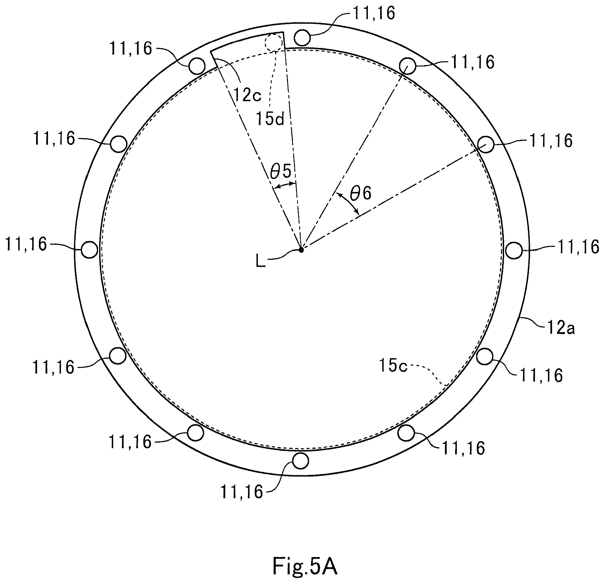

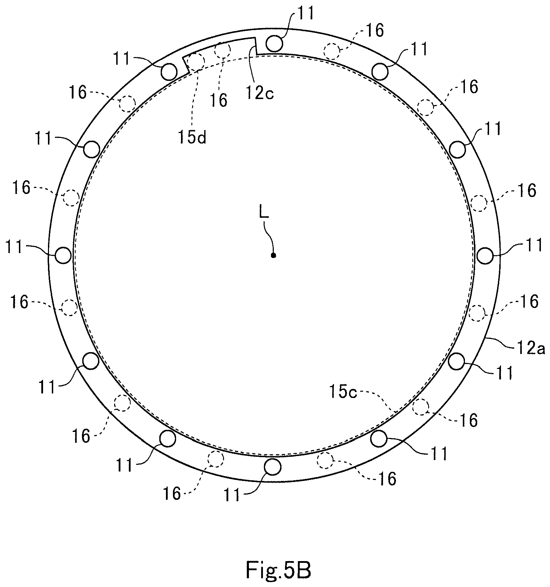

Fig. 1 is a schematic side view of an imaging device 3 using a lens unit 1 according to an embodiment of the invention. Fig. 2 is an exploded perspective view of the lens unit 1 illustrated in Fig. 1. Fig. 3(A) is an enlarged view of portion E in Fig. 2(A). Fig. 3(B) is an enlarged view of portion F in Fig. 2(B). Fig. 4(A) is a cross-sectional view of a part of a lens barrel 6 and an attachment 7 that are illustrated in Fig. 2. Figs. 4(B) and 4(C) are enlarged cross-sectional views explaining a structure of portion G in Fig. 4(A). Fig. 5 is a diagram explaining an arrangement relation among magnets 11 and 16, a recess 12c, and a protrusion 15d that are illustrated in Fig. 3 from a side opposite to a subject.

The lens unit 1 in the embodiment includes a plurality of lenses 2 and is used by the imaging device 3. Specifically, the lens unit 1 is an interchangeable lens that is attached to a camera body 4 of the imaging device 3 in a detachable manner. The camera body 4 includes an imaging element (not illustrated) such as a CMOS image sensor. The lens unit 1 is attached to the camera body 4 by a bayonet connection mechanism, for example, in a detachable manner. The lens unit 1 is formed in a substantially columnar shape as a whole. The axial center of the lens unit 1 formed in a substantially columnar shape and an optical axis L of the lenses 2 coincide.

One side of the direction of the optical axis L of the lenses 2 (optical axis direction) is defined as a subject side. The side opposite to the subject side (the other side of the optical axis direction) is defined as a side opposite to a subject (an image forming side). The lens unit 1 is disposed on the subject side of the camera body 4 while the camera body 4 is disposed on the side opposite to a subject of the lens unit 1. In the following description, the subject side (a Z1 direction side in Fig. 1, for example,) is defined as a "front" side while the side opposite to a subject (a Z2 direction side in Fig. 1, for example) is defined as a "rear" side. A radius direction of the lenses 2 (i.e., the direction orthogonal to the optical axis L) is defined as a "radius direction". A circumferential direction of the lenses 2 (a direction along its circumference, i.e., a direction around the optical axis L of the lenses 2) is defined as a "circumferential direction".

The lens unit 1 includes the lens barrel 6 that holds the lenses 2 and the attachment 7 that is attached to an end portion of the lens barrel 6 in a front-rear direction (optical axis direction) in a detachable manner. The attachment 7 in the embodiment is a filter component having an optical filter 8. The attachment 7 in the embodiment is attached to the rear end portion of the lens barrel 6 (i.e., the end portion on the side opposite to a subject of the lens barrel 6) in a detachable manner.

The lens barrel 6 includes a cylindrical unit 10 that forms the rear end portion of the lens barrel 6 and has a cylindrical shape, magnets 11 that are used for attaching the attachment 7 to the rear end portion (i.e., the cylindrical unit 10) of the lens barrel 6, and a magnet holding member 12 that holds the magnets 11. The magnets 11 are permanent magnets. The magnets 11 are, for example, rare earth magnets with relatively strong magnetism. Specifically, the magnets 11 are neodymium magnets. The lens barrel 6 in the embodiment includes the plurality of magnets 11. Specifically, the lens barrel 6 includes the 12 magnets 11. The magnet holding member 12 holds the 12 magnets 11. Each magnet 11 in the embodiment is the first magnet. The number of magnets 11 included in the lens barrel 6 may be equal to or smaller than 11 or equal to or larger than 13.

The cylindrical unit 10 is formed of a resin. The axial center of the cylindrical unit 10 coincides with the optical axis L of the lenses 2. The cylindrical unit 10 has bayonet claws (not illustrated) that are used for attaching the lens unit 1 to the camera body 4 and formed on its outer circumferential surface. The magnet holding member 12 is formed of a resin. The magnet holding member 12 is formed in an annular shape. The magnet holding member 12 is disposed on an inner circumferential side of the rear end portion of the cylindrical unit 10 such that the axial center of the magnet holding member 12 and the optical axis L of the lenses 2 coincide. The rear end portion of the magnet holding member 12 is a magnet fixing portion 12a that has an annular shape and to which the 12 magnets 11 are fixed. The rear surface of the magnet fixing portion 12a is a flat surface orthogonal to the front-rear direction. The cylindrical unit 10 and the magnet holding member 12 may be formed of a non-magnetic material other than resins. The cylindrical unit 10 and the magnet holding member 12 may be formed of a non-magnetic metallic material such as an aluminum alloy, a non-metallic material other than resins, or ceramic of inorganic compounds, for example.

On the outer circumference (the outside edge in the radius direction) of the rear end of the magnet holding member 12, a contact surface 12b is formed that is used for positioning the attachment 7 to the lens barrel 6 in the radius direction (i.e., in the direction orthogonal to the optical axis L). The shape of the contact surface 12b when viewed from the front-rear direction (optical axis direction) is an annular shape having the optical axis L as the center of curvature. The contact surface 12b is formed over the whole area in the circumferential direction. The contact surface 12b is an inclined surface that is inclined with respect to the front-rear direction (optical axis direction). Specifically, the contact surface 12b is formed such that it is inclined toward the front side as it goes toward the outside in the radius direction. An inclination angle θ1 of the contact surface 12b with respect to the front-rear direction (refer to Fig. 4(B)) is 45°, for example. The contact surface 12b in the embodiment is the first contact portion. When the inclination angle θ1 is too small (is too much inclined to the optical axis direction), the contact surface 12b cannot adjust a shift in the front-rear direction (optical axis direction). On the other hand, when the inclination angle θ1 is too large (is too much inclined upward from the optical axis direction), contact pressure between a contact surface 15b, which is described later, of the attachment 7 and the contact surface 12b may increase.

As described above, the magnets 11 are permanent magnets. Each magnet 11 is, for example, formed in a disk like shape. As illustrated in Fig. 5, the 12 magnets 11 are arranged in an annular shape having the optical axis L of the lenses 2 as the center and at equal angular pitches around the optical axis L of the lenses 2 when viewed from the front-rear direction (optical axis direction). In other words, the 12 magnets 11 are fixed to the magnet fixing portion 12a at a pitch of 30° around the optical axis L when viewed from the front-rear direction.

The magnet fixing portion 12a has a recess 12c that is used for positioning the attachment 7 to the lens barrel 6 in the circumferential direction (i.e., the direction around the optical axis L). As illustrated in Fig. 5, the recess 12c is formed such that it is recessed from the inner circumferential surface of the magnet fixing portion 12a toward the outside in the radius direction, and passes through the magnet fixing portion 12a in the front-rear direction. The shape of the recess 12c when viewed from the front-rear direction (optical axis direction) is an arc like shape having the optical axis L of the lenses 2 as the center of curvature. The recess 12c is formed between two magnets 11 adjacent in the circumferential direction. This structure causes a central angle θ5 (refer to Fig. 5(A)), which is made by the recess 12c formed in an arc like shape with respect to the optical axis L, to be smaller than an angle θ6 (refer to Fig. 5(A)), which is the arrangement pitch angle of the 12 magnets 11 with respect to the optical axis L when viewed form the front-rear direction. In other words, the central angle θ5 is smaller than 30°. The recess 12c in the embodiment is the first positioning portion.

The attachment 7 includes a filter holding member 15 that holds the optical filter 8, and the magnets 16 that are used for attaching the attachment 7 to the rear end portion of the lens barrel 6 besides the optical filter 8. The optical filter 8 is one of various filters such as an ND filter, a low-pass filter, and an IR cut filter, for example. The magnets 16 are permanent magnets. The magnets 16 are, for example, rare earth magnets with relatively strong magnetism, in the same manner as the magnets 11. Specifically, the magnets 16 are neodymium magnets. The attachment 7 in the embodiment includes the plurality of magnets 16. Specifically, the number of magnets 16 included in the attachment 7 is the same as that of magnets 11 (i.e., 12 magnets 16 are included). The filter holding member 15 holds the 12 magnets 16 besides the optical filter 8. Each magnet 16 in the embodiment is the second magnet.

The filter holding member 15 is formed of a resin. The filter holding member 15 is formed in a flat cylindrical shape with a flange portion 15a having an annular shape. The attachment 7 is attached to the lens barrel 6 such that the axial center of the filter holding member 15 and the optical axis L of the lenses 2 coincide. Imaging rays pass through an inner circumferential side of the filter holding member 15. The flange portion 15a is formed on the front end of the filter holding member 15. The filter holding member 15 may be formed by a non-magnetic material other than resins. The filter holding member 15 may be formed of a non-magnetic metallic material such as an aluminum alloy, a non-metallic material other than resins, or ceramic of inorganic compounds, for example.

On the inner circumferential surface of the front end portion of the flange portion 15a, the contact surface 15b is formed that positions the attachment 7 to the lens barrel 6 in the radius direction (i.e., the direction orthogonal to the optical axis L). The shape of the contact surface 15b when viewed from the front-rear direction (optical axis direction) is an annular shape having the optical axis L as the center of curvature. The contact surface 15b is an inclined surface that is inclined with respect to the front-rear direction (optical axis direction). Specifically, the contact surface 15b is formed such that it is inclined toward the front side as it goes toward the outside in the radius direction. An inclination angle θ2 of the contact surface 15b with respect to the front-rear direction (refer to Fig. 4(B)) is equal to the inclination angle θ1 of the contact surface 12b. The inclination angles θ1 and θ2, which are in the relation of alternate-interior angles, are equal, resulting in the contact surfaces 12b and 15b becoming parallel to each other when the attachment 7 is mounted to the lens barrel 6. This makes it possible for the contact surfaces 12b and 15b to be in contact with in a face contact manner on the whole periphery. As a result, a more stable contact state can be achieved. The contact surfaces 12b and 15b are both the annular shaped inclined surface each having the optical axis L as the center of curvature. The centers of curvature of the contact surfaces 12b and 15b coincide when they are in the stable contact state. As a result, positioning can be appropriately done.

In a state where the attachment 7 is attached to the lens barrel 6, as illustrated in Fig. 4(C), the contact surface 15b is in contact with the contact surface 12b. As a result of the contact between the contact surfaces 12b and 15b, the attachment 7 is positioned to the lens barrel 6 in the radius direction. The contact surface 15b in the embodiment is the second contact portion. In the state where the attachment 7 is attached to the lens barrel 6, a gap S1 is formed between the inner circumferential surface of the cylindrical unit 10 and the outer circumferential surface of the flange portion 15a (refer to Fig. 4(C)). The gap S1 prevents the contact between the attachment 7 and the cylindrical unit 10, thereby making it possible to prevent this contact from influencing the contact between the contact surfaces 12b and 15b.

The portion on the rear side of the portion where the contact surface 15b is formed of the filter holding member 15 is a magnet fixing portion 15c that has an annular shape and to which the 12 magnets 16 are fixed. The front surface of the magnet fixing portion 15c is a flat surface orthogonal to the front-rear direction. As described above, the magnet 16 is a permanent magnet. The magnet 16 is formed in the same shape as the magnet 11, for example. Under the condition where the magnets 11 and 16 have the same shape, a change in a state where the magnets 11 and 16 are opposite to each other and a change in magnetic attraction force have a linear relation. This makes it possible to easily position the attachment 7 and the lens barrel 6 in the circumferential direction with respect to the optical axis L.

As illustrated in Fig. 5, the 12 magnets 16 are arranged in an annular shape having the optical axis L of the lenses 2 as the center and at equal angular pitches around the optical axis L of the lenses 2 when viewed from the front-rear direction (optical axis direction), in the same manner as the 12 magnets 11. In other words, the 12 magnets 16 are fixed to the magnet fixing portion 15c at a pitch of 30° around the optical axis L when viewed from the front-rear direction. When viewed from the front-rear direction, the distance between the optical axis L and each magnet 11 in the radius direction and the distance between the optical axis L and each magnet 16 in the radius direction are equal. When viewed from the front-rear direction, the distance between the optical axis L and the magnet 11 in the radius direction and the distance between the optical axis L and the magnet 16 in the radius direction may slightly differ. The magnets 11 and 16 are desirably arranged at symmetrical positions with respect to the optical axis L. When the magnets 11 and 16 are arranged at symmetrical positions with respect to the optical axis L, force fixing the attachment 7 to the lens barrel 6 caused by magnetic attraction force occurs between the magnet fixing portions 12a and 15c symmetrically with respect to the optical axis L. The filter holding member 15 is, thus, attracted to the lens barrel 6 such that the axial center of the filter holding member 15 easily coincides with the optical axis L.

In the embodiment, each of the 12 magnets 16 is attracted to corresponding one of the 12 magnets 11, resulting in the attachment 7 being attached to the lens barrel 6. When the attachment 7 is attached to the lens barrel 6, the rear surface of the magnet fixing portion 12a and the front surface of the magnet fixing portion 15c are slightly in contact with each other, or a slight gap S2 is formed between the rear surface of the magnet fixing portion 12a and the front surface of the magnet fixing portion 15c (refer to Fig. 4(C)) so as to cause the contact surfaces 12b and 15b to be firmly in contact with each other on the whole periphery. When the attachment 7 is attached to the lens barrel 6, the magnets 11 and 16 are slightly in contact with each other or a slight gap is formed between the magnets 11 and 16 so as to cause the contact surfaces 12b and 15b to be firmly in contact with each other. The gap S2 prevents interference between the magnet fixing portions 12a and 15c, thereby preventing hindrance of the contact between the contact surfaces 12b and 15b. As a result, the contact surfaces 12b and 15b can be firmly in contact with each other. Consequently, positioning of the attachment 7 to the lens barrel 6 can be firmly done such that the axial center of the attachment 7 and the optical axis L of the lens barrel 6 coincide.

The magnet fixing portion 15c has a protrusion 15d that is fitted in the recess 12c of the lens barrel 6. The protrusion 15d is formed in a substantially columnar shape. The protrusion 15d protrudes on the front side from the front surface of the magnet fixing portion 15c. The protrusion 15d protrudes in the optical axis direction. The protrusion 15d is formed between the two magnets 16 adjacent in the circumferential direction. The outer diameter of the protrusion 15d is nearly equal to the width of the recess 12c in the radius direction (refer to Fig. 5). The protrusion 15d may be formed integrally with the magnet fixing portion 15c. The protrusion 15d may be formed separately from the magnet fixing portion 15c and fixed to the magnet fixing portion 15c.

The length of the protrusion 15d in the optical axis direction may be such a length that the protrusion 15d is not easily come off from the recess 12c when the attachment 7 is rotated in the circumferential direction with respect to the lens barrel 6 in the state where the protrusion 15d is fitted in the recess 12c. The length of the protrusion 15d may be set in the following manner. When the protrusion 15d fails to be fitted in the recess 12c, resulting in the interference between the protrusion 15d and the magnet fixing portion 12a, a gap according to the length of the protrusion 15d is formed between the magnets 11 and 16. As the gap increases, magnetic attraction force is weakened between the magnets 11 and 16. Accordingly, the length of the protrusion 15d is set such that the length forms the gap that weakens magnetic attraction force between the magnets 11 and 16 to have a strength incapable of mounting the attachment 7 to the lens barrel 6, when the protrusion 15d and the magnet fixing portion 12a interfere with each other. The protrusion 15d having the length set as described above disables the attachment 7 to be mounted to the lens barrel 6 unless the protrusion 15d is fitted in the recess 12c. This makes it possible to prevent the lens barrel 6 to which the attachment 7 is not correctly mounted from being mounted to the camera body 4.

When the attachment 7 is attached to the lens barrel 6 at a correct position, the protrusion 15d is disposed at the end of the recess 12c in the direction of a clockwise rotation in Fig. 5 as illustrated in Fig. 5(A), for example. As described above, the central angle θ5 of the recess 12c with respect to the optical axis L is smaller than the arrangement pitch angle θ6 of the 12 magnets 11 with respect to the optical axis L. When the attachment 7 is not disposed at the correct position in the circumferential direction, the protrusion 15d fails to be fitted in the recess 12c, thereby being in contact with the rear surface of the magnet fixing portion 12a. As a result, the attachment 7 cannot be attached to the lens barrel 6. In the embodiment, the recess 12c and the protrusion 15d cause the attachment 7 to be positioned to the lens barrel 6 in the circumferential direction (direction around the optical axis L) and make it possible for the attachment 7 to be attached to the lens barrel 6 at only the correct position. The protrusion 15d in the embodiment is the second positioning portion that positions the attachment 7 to the lens barrel 6 in the direction around the optical axis L together with the recess 12c, which is the first positioning portion.

When the attachment 7 attached to the lens barrel 6 is detached from the lens barrel 6, as illustrated in Fig. 5(B), the attachment 7 is rotated in the direction of a counter clockwise rotation in Fig. 5 (hereinafter, this direction is described as the "counter clockwise direction") with respect to the lens barrel 6 so as to weaken magnetic attraction force between the magnets 11 and 16. In the embodiment, the central angle θ5 of the recess 12c with respect to the optical axis L is set to such an angle that the magnets 11 and 16 do not completely overlap with each other when viewed from the front-rear direction in a case where the attachment 7 attached to the lens barrel 6 is rotated in the counter clockwise direction. For example, the central angle θ5 is set such that the magnet 16 is disposed at the substantially center between the magnets 11 adjacent in the circumferential direction when viewed from the front-rear direction in a case where the attachment 7 is rotated in the counter clockwise direction until the protrusion 15d is disposed at the end of the recess 12c in the counter clockwise direction, as illustrated in Fig. 5(B).

When the magnet 16 is disposed at the substantially center between the magnets 11 adjacent in the circumferential direction, magnetic attraction force generated between one of the two magnets 11 adjacent in the circumferential direction and the magnet 16 and magnetic attraction force generated between the other of the two magnets 11 adjacent in the circumferential direction and the magnet 16 are nearly equal. When magnetic attraction force generated between one of the two magnets 11 adjacent in the circumferential direction and the magnet 16 and magnetic attraction force generated between the other of the two magnets 11 adjacent in the circumferential direction and the magnet 16 are nearly equal, the sum of magnetic attraction force of the magnets 11 acting on the magnet 16 becomes the weakest. This makes it possible to easily detach the attachment 7 from the lens barrel 6. The magnetic attraction force generated between the magnets 11 and 16 may be weakened to have such a level that the attachment 7 is detached from the lens barrel 6 smoothly. The central angle θ5 can be appropriately adjusted according to the strength of the magnetic attraction force generated between the magnets 11 and 16. For example, the central angle θ5 may be set such an angle that the magnets 11 and 16 slightly overlap with each other when viewed from the front-rear direction in a case where the attachment 7 attached to the lens barrel 6 is rotated in the counter clockwise direction. When the magnet 16 is disposed at the substantially center between the magnets 11 adjacent in the circumferential direction and the attachment 7 is slightly rotated in the direction of the clockwise rotation (clockwise direction) in mounting the attachment 7 to the lens barrel 6, the magnetic attraction force acting between the magnet 11 disposed on the clockwise direction side and the magnet 16 is stronger than the magnetic attraction force acting between the magnet 11 disposed on the counter clockwise direction side and the magnet 16. This makes it easy to rotate the attachment 7 to the position where the protrusion 15d is disposed at the end in the clockwise direction as illustrated in Fig. 5(A).

### Major effects of the embodiment

As described above, the lens unit 1 in the embodiment includes the lens barrel 6 that holds the lenses 2, and the attachment 7 that is attached to the end portion of the lens barrel 6 in the optical axis direction of the lenses 2 in a detachable manner. The lens barrel 6 includes the magnets 11 that are permanent magnets and used for attaching the attachment 7 to the end portion of the lens barrel 6. The attachment 7 includes the magnets 16 that are permanent magnets and attracted to the magnets 11. The lens barrel 6 has the contact surface 12b that is used for positioning the attachment 7 to the lens barrel 6 in the direction orthogonal to the optical axis direction of the lenses 2. The contact surface 12b is an inclined surface that is inclined with respect to the optical axis direction of the lenses 2. The attachment 7 has the contact surface 15b that is in contact with the contact surface 12b.

In the embodiment, the lens barrel 6 includes the magnets 11 used for attaching the attachment 7 to the end portion of the lens barrel 6 while the attachment 7 includes the magnets 16 attracted to the magnets 11. In other words, in the embodiment, the attachment 7 is attached to the lens barrel 6 by magnetic attraction force. Therefore, in the embodiment, the attachment 7 can be easily attached to and detached from the lens barrel 6.

In the embodiment, the lens barrel 6 has the contact surface 12b used for positioning the attachment 7 to the lens barrel 6 in the direction orthogonal to the optical axis direction of the lenses 2 while the attachment 7 has the contact surface 15b that is in contact with the contact surface 12b. Therefore, in the embodiment, the attachment 7 can be accurately attached to the lens barrel 6 in the direction orthogonal to the optical axis direction of the lenses 2 using the contact surfaces 12b and 15b that are in contact with each other, although the attachment 7 is attached to the lens barrel 6 by magnetic attraction force.

Further, in the embodiment, the contact surface 12b is an inclined surface that is inclined with respect to the optical axis direction of the lenses 2. The embodiment, thus, makes it possible for the attachment 7 to be more easily attached to and detached from the lens barrel 6 than the following exemplary case. In the exemplary case, the lens barrel 6 has a first cylindrical unit having an outer circumferential surface parallel to the optical axis direction of the lenses 2, the attachment 7 has a second cylindrical unit having an inner circumferential surface parallel to the optical axis direction of the lenses 2, and the attachment 7 is positioned to the lens barrel 6 in the direction orthogonal to the optical axis direction of the lenses 2 by the outer circumferential surface of the first cylindrical unit and the inner circumferential surface of the second cylindrical unit.

In the case where the attachment 7 is positioned to the lens barrel 6 in the direction orthogonal to the optical axis direction of the lenses 2 by the outer circumferential surface of the first cylindrical unit and the inner circumferential surface of the second cylindrical unit, when the attachment 7 is inclined with respect to the optical axis direction of the lenses 2 while the attachment 7 is attached to and detached from the lens barrel 6, contact pressure between the outer circumferential surface of the first cylindrical unit and the inner circumferential surface of the second cylindrical unit partially increases. As a result, galling easily occurs between the outer circumferential surface of the first cylindrical unit and the inner circumferential surface of the second cylindrical unit. When such galling occurs, it is difficult for the attachment 7 to be attached to and detached from the lens barrel 6. Attention, thus, should be paid that the attachment 7 is not inclined with respect to the optical axis direction of the lenses 2 while the attachment 7 is attached to and detached from the lens barrel 6. In contrast, in the embodiment, the contact surface 12b is an inclined surface that is inclined with respect to the optical axis direction of the lenses 2. This makes it possible to prevent the occurrence of galling between the contact surfaces 12b and 15b even when the attachment 7 is inclined with respect to the optical axis direction of the lenses 2 while the attachment 7 is attached to and detached from the lens barrel 6. Even when the attachment 7 is inclined with respect to the optical axis direction of the lenses 2 while the attachment 7 is attached to the lens barrel 6, the contact surface 12b is in contact with the contact surface 15b as the inclined surface. This makes it possible to prevent the occurrence of galling between the contact surfaces 12b and 15b, thereby making it possible to prevent a partial increase in contact pressure between the contact surfaces 12b and 15b. The embodiment, thus, does not need to pay attention that the attachment 7 is not inclined with respect to the optical axis direction of the lenses 2 while the attachment 7 is attached to and detached from the lens barrel 6. As a result, the embodiment makes it possible for the attachment 7 to be easily attached to and detached from the lens barrel 6.

As described in the embodiment, it is preferable that the contact surface 15b be an inclined surface that is inclined with respect to the optical axis direction of the lenses 2 and in contact with the contact surface 12b. This structure makes it possible to increase a contact area between the contact surfaces 12b and 15b. As a result, the contact state between the contact surfaces 12b and 15b can be stabilized.

As described in the embodiment, it is preferable that the lens barrel 6 include the magnets 11 that are arranged in an annular shape having the optical axis L of the lenses 2 as the center and at equal angular pitches around the optical axis L of the lenses 2 when viewed from the optical axis direction of the lenses 2, the attachment 7 include the same number of magnets 16 as the number of magnets 11, and the magnets 16 be arranged in an annular shape having the optical axis L of the lenses 2 as the center and at equal angular pitches around the optical axis L of the lenses 2 when viewed from the optical axis direction of the lenses 2. This structure makes it possible to increase the strength of attaching the attachment 7 to the lens barrel 6 using the magnets 11 and the magnets 16.

As described in the embodiment, it is preferable that the shape of the contact surface 12b when viewed from the optical axis direction of the lenses 2 be an annular shape having the optical axis L of the lenses 2 as the center of curvature. This structure makes it possible to weaken magnetic attraction force between the magnets 11 and 16 by rotating the attachment 7 attached to the lens barrel 6 around the optical axis L of the lenses 2 using the contact surface 12b. Therefore, even when the magnetic attraction force between the magnets 11 and 16 is relatively strong, the attachment 7 can be easily detached from the lens barrel 6. This structure also makes it easier to machine the contact surface 12b on the lens barrel 6 than a case where the contact surface 12b is formed in an arc like shape. This is because that the contact surface 12b can be made as a single flat surface over the whole periphery. When a portion corresponding to the contact surface 12b of the lens barrel 6 is formed, as ridges and valleys on the portion to be formed increase, the labor and time required for necessary work to form the shape of the portion increase regardless of that the portion is formed by cutting or molding, thereby increasing difficulty in machining. The contact surface 12b formed in a simple annular shape can reduce the difficulty in machining, a cost, and a required time, thereby making it easy to machine the contact surface 12b.

As described in the embodiment, it is preferable that the lens barrel 6 have the recess 12c that is used for positioning the attachment 7 to the lens barrel 6 in the direction around the optical axis L of the lenses 2 while the attachment 7 have the protrusion 15d that is used for positioning the attachment 7 to the lens barrel 6 in the direction around the optical axis L of the lenses 2 together with the recess 12c. This structure makes it possible for the attachment 7 to be attached to the lens barrel 6 at the correct position using the recess 12c and the protrusion 15d, although, in the lens barrel 6, the magnets 11 are arranged in an annular shape having the optical axis L of the lenses 2 as the center and at equal angular pitches around the optical axis L of the lenses 2 when viewed from the optical axis direction of the lenses 2, and, in the attachment 7, the magnets 16 are arranged in an annular shape having the optical axis L of the lenses 2 as the center and at equal angular pitches around the optical axis L of the lenses 2 when viewed from the optical axis direction of the lenses 2.

As described in the embodiment, it is preferable that the shape of the recess 12c when viewed from the optical axis direction of the lenses 2 be an arc like shape having the optical axis L of the lenses 2 as the center of curvature, and the central angle θ5 of the recess 12c, which is formed in an arc like shape, with respect to the optical axis L of the lenses 2 be smaller than the arrangement pitch angle θ6 of the magnets 11 with respect to the optical axis L of the lenses 2 when viewed from the optical axis direction of the lenses 2. This structure makes it possible to weaken the magnetic attraction force between the magnets 11 and 16 by rotating the attachment 7 attached to the lens barrel 6 around the optical axis L of the lenses 2, although the attachment 7 can be attached to the lens barrel 6 only at the correct position using the recess 12c and the protrusion 15d. As a result, this structure makes it possible to easily detach the attachment 7 from the lens barrel 6, although the attachment 7 can be attached to the lens barrel 6 only at the correct position using the recess 12c and the protrusion 15d and even when the magnetic attraction force between the magnets 11 and 16 is relatively strong.

As described in the embodiment, it is preferable that the attachment 7 include the magnets 16. This structure makes it possible to attach the attachment 7 to the lens barrel 6 by magnetic attraction force between the magnets 11 and 16, thereby making it possible to further increase the strength of attaching the attachment 7 to the lens barrel 6 than a case where the attachment 7 includes soft magnetic bodies attracted to the magnets 11.

### Other embodiments

In the embodiment described above, the lens barrel 6 may include soft magnetic bodies attracted to the magnets 16 instead of the magnets 11. In the case where the lens barrel 6 includes the magnets 11, when powdered magnetic bodies such as iron sand stick to the magnets 11, the lens barrel 6, which is expensive, may be unusable in the worst case. The lens barrel 6 including the soft magnetic bodies, however, can avoid a case where powdered magnetic bodies stick to the expensive lens barrel 6, thereby causing the lens barrel 6 to be unusable. In the embodiment described above, the attachment 7 may include soft magnetic bodies attracted to the magnets 11 instead of the magnets 16. When the lens barrel 6 includes the soft magnetic bodies instead of the magnets 11, the magnets 16 included in the attachment 7 are the first magnets.

In the embodiment described above, a contact surface that is used for positioning the attachment 7 to the lens barrel 6 in the direction orthogonal to the optical axis L may be formed on the inner circumferential side of the rear end of the magnet holding member 12 instead of the contact surface 12b. In this case, the contact surface is an inclined surface that is formed such that it is inclined toward the rear side as it goes toward the outside in the radius direction. In this case, a contact surface that is in contact with this contact surface in a face contact manner is formed on the attachment 7.

In the embodiment described above, the contact surface 15b, which is in contact with the contact surface 12b, may be a plurality of or a single inclined surface that has an arc like shape having the optical axis L as the center of curvature when viewed from the front-rear direction (optical axis direction). Likewise, in the embodiment described above, the contact surface 12b, which is in contact with the contact surface 15b, may be a plurality of or a single inclined surface that has an arc like shape having the optical axis L as the center of curvature when viewed from the front-rear direction. In the embodiment described above, the contact surfaces 12b and 15b may be each a plurality of or a single inclined surface that has an arc like shape having a position off from the optical axis L as the center of curvature when viewed from the front-rear direction, or may be a plurality of inclined surfaces having a straight line shape when viewed from the front-rear direction.

In the embodiment described above, a protrusion that is in contact with the contact surface 12b in a point contact or a line contact manner may be formed on the attachment 7, for example. In this case, the protrusion that is in contact with the contact surface 12b in a point contact or a line contact manner, for example, is the second contact portion. In the embodiment described above, a protrusion that is in contact with the contact surface 15b in a point contact or a line contact manner may be formed on the lens barrel 6, for example. In this case, the contact surface 15b is the first contact portion while the protrusion that is in contact with the contact surface 15b in a point contact or a line contact manner, for example, is the second contact portion.

In the embodiment described above, the recess 12c may be formed in a round hole shape in which the protrusion 15d is fitted. In the embodiment described above, a recess equivalent to the recess 12c may be formed on the attachment 7 while a protrusion equivalent to the protrusion 15d may be formed on the lens barrel 6. In the embodiment described above, a mark that is used for positioning the attachment 7 to the lens barrel 6 in the circumferential direction (i.e., in the direction around the optical axis L) may be formed each on the outer circumferential surface of the cylindrical unit 10 and the outer circumferential surface of the filter holding member 15. In other words, the first positioning portion and the second positioning portion that are used for positioning the attachment 7 to the lens barrel 6 in the direction around the optical axis L may be the marks formed on the outer circumferential surface of the cylindrical unit 10 and the outer circumferential surface of the filter holding member 15. In this case, the recess 12c and the protrusion 15d are unnecessary.

In the embodiment described above, the attachment 7 may be one other than the filter component. For example, the attachment 7 may be a flare cutter that prevents internal reflection inside the lens barrel 6 and the inside the camera body 4, an aperture mechanism configured to regulate a light amount, or a lens component having an additional lens. The attachment 7 may be a lens cap. When the attachment 7 is a lens cap, the attachment 7 is detached from the lens barrel 6 before the lens unit 1, which is an interchangeable lens, is attached to the camera body 4.

In the embodiment described above, the attachment 7 is attached to the rear end portion of the lens barrel 6 in a detachable manner. However, the attachment 7 may be attached to a front end portion of the lens barrel 6 (the end portion of the lens barrel 6 on the subject side) in a detachable manner. In this case, the lens unit 1 may not be an interchangeable lens. In other words, the lens unit 1 may be fixed to the camera body 4. When the attachment 7 is attached to the front end portion of the lens barrel 6 in a detachable manner, the attachment 7 may be a protection component including a protection glass for protecting the lenses 2, for example.

In the embodiment described above, the magnets 11 and 16 are arranged in an annular shape having the optical axis L of the lenses 2 as the center and at equal angular pitches around the optical axis L of the lenses 2 when viewed from the front-rear direction (optical axis direction). However, a part or all of the arrangement pitch angles of the magnets 11 and 16 can be changed. In such a case, the recess 12c may be disposed between the magnets 11 arranged at the largest arrangement pitch angle.

### Reference Signs List

1 lens unit
2 lenses
6 lens barrel
7 attachment
8 optical filter
11 magnet (first magnet)
12b contact surface (first contact portion)
12c recess (first positioning portion)
15b contact surface (second contact portion)
15d protrusion (second positioning portion)
16 magnet (second magnet)
L optical axis of lenses
θ5 central angle of recess with respect to the optical axis of lenses
θ6 arrangement pitch angle of first magnets with respect to the optical axis of lenses
Z2 side opposite to a subject

## Claims

1. A lens unit comprising:
a lens barrel that holds lenses; and
an attachment that is attached to the lens barrel at an end portion of the lens barrel in an optical axis direction of the lenses in a detachable manner, wherein
either one of the lens barrel and the attachment includes first magnets that are permanent magnets and used for attaching the attachment to the end portion of the lens barrel,
the other of the lens barrel and the attachment includes second magnets that are permanent magnets and attracted to the first magnets or soft magnetic bodies that are attracted to the first magnets,
either one of the lens barrel and the attachment has a first contact portion that is used for positioning the attachment to the lens barrel in a direction orthogonal to the optical axis direction of the lenses,
the first contact portion is an inclined surface that is inclined with respect to the optical axis direction of the lenses, and
the other of the lens barrel and the attachment has a second contact portion that is in contact with the first contact portion.

2. The lens unit according to claim 1, wherein the attachment is a filter component having an optical filter, a flare cutter that prevents internal reflection inside the lens barrel, an aperture mechanism configured to regulate a light amount, a lens component having an additional lens, or a lens cap.

3. The lens unit according to claim 1 or 2, wherein the second contact portion is an inclined surface that is inclined with respect to the optical axis direction of the lenses and in contact with the first contact portion.

4. The lens unit according to claim 1 or 2, wherein
either one of the lens barrel and the attachment includes a plurality of the first magnets that are arranged in an annular shape having the optical axis of the lenses as the center when viewed from the optical axis direction of the lenses, and
the other of the lens barrel and the attachment includes the same number of second magnets or soft magnetic bodies as the number of first magnets, the second magnets or the soft magnet bodies being arranged in an annular shape having the optical axis of the lenses as the center when viewed from the optical axis direction of the lenses.

5. The lens unit according to claim 4, wherein
the first magnets are arranged at equal angular pitches around the optical axis of the lenses when viewed from the optical axis direction of the lenses, and
the second magnets or the soft magnetic bodies are arranged at equal angular pitches around the optical axis of the lenses when viewed from the optical axis direction of the lenses.

6. The lens unit according to claim 4, wherein the shape of the first contact portion when viewed from the optical axis direction of the lenses is an annular shape or an arc like shape having the optical axis of the lenses as the center of curvature.

7. The lens unit according to claim 6, wherein the shape of the first contact portion when viewed from the optical axis direction of the lenses is an annular shape having the optical axis of the lenses as the center of curvature.

8. The lens unit according to claim 4, wherein
either one of the lens barrel and the attachment has a first positioning portion that is used for positioning the attachment to the lens barrel in the direction around the optical axis of the lenses, and
the other of the lens barrel and the attachment has a second positioning portion that is used for positioning the attachment to the lens barrel in the direction around the optical axis of the lenses together with the first positioning portion.

9. The lens unit according to claim 8, wherein
the first positioning portion is a recess,
the second positioning portion is a protrusion that is fitted in the recess, and
the protrusion protrudes in the optical axis direction of the lenses.

10. The lens unit according to claim 9, wherein
the shape of the recess when viewed from the optical axis direction of the lenses is an arc like shape having the optical axis of the lenses as the center of curvature, and
a central angle of the recess formed in an arc like shape with respect to the optical axis of the lenses is smaller than an arrangement pitch angle of the first magnets with respect to the optical axis of the lenses when viewed from the optical axis direction of the lenses.

11. The lens unit according to claim 1 or 2, wherein the other of the lens barrel and the attachment includes the second magnets.

12. The lens unit according to claim 1 or 2, wherein
the attachment includes the first magnets and
the lens barrel includes the soft magnetic bodies.

13. The lens unit according to claim 1 or 2, wherein the attachment is attached to the end portion of the lens barrel on the side opposite to a subject in a detachable manner.
